# EUROPÄISCHE PATENTSCHRIFT

(11) **EP 1 784 095 B1**
(45) Veröffentlichungstag und Bekanntmachung des Hinweises auf die Patenterteilung: **23.01.2008**
(21) Anmeldenummer: 06791931.6
(22) Anmeldetag: 08.09.2006
(51) Int. Cl.: A43B 13/26, A43B 5/02, A43C 15/16, B29C 45/00, B29D 31/508

(54) **SPORTSCHUH UND VERFAHREN ZU SEINER HERSTELLUNG**
SPORTS SHOE AND METHOD OF PRODUCING IT
CHAUSSURES DE SPORT ET PROCEDES DE PRODUCTION ASSOCIES

(30) Priorität: 27.09.2005 DE 102005046138
(43) Veröffentlichungstag der Anmeldung: 16.05.2007
(73) Patentinhaber: Uhlsport GmbH, 72336 Balingen (DE)
(72) Erfinder: KEPPLER, Thomas, 72770 Reutlingen/Bronnweiler (DE); SCHAUDT, Thomas, 72401 Haigerloch (DE)
(74) Vertreter: Bunke, Holger
(86) Internationale Anmeldenummer: PCT/EP2006/008764
(87) Internationale Veröffentlichungsnummer: WO 2007/036292

(56) Entgegenhaltungen:
- WO-A-97/46127
- WO-A-20/05120273
- NL-A- 6 710 854
- US-A- 6 023 859
- US-A1- 2006 021 255

## Beschreibung

Die Erfindung betrifft einen Sportschuh, insbesondere Fußballschuh oder Sprintschuh, mit einem Schaft und einer Sohle, die bodenseitig mit einem Muster von Traktionshilfen zum Eingriff in die Oberfläche eines Rasen- oder Hartplatzes versehen ist.

Außerdem betrifft die Erfindung ein Verfahren zur Herstellung eines solchen Sportschuhs, bei dem aus mindestens einem Schaftmaterial-Zuschnitt ein Schaft gebildet und mit einer Sohle verbunden wird, die auf ihrer Unterseite aus der Sohlenebene herausragende, in einem Muster angeordnete Traktionshilfen aufweist.

Bei Fußballschuhen versteht man unter "Traktionshilfen" in erster Linie Stollen und Spikes sowie komplex geformte Traktionselemente, wie sie beispielsweise in der DE-A-101 26 557 beschrieben sind. Als Traktionshilfen für Sprintschuhe werden üblicherweise Spikes verwendet. Alle diese Traktionshilfen können entweder einstückig mit der Sohle des Sportschuhs aus Kunststoff, beispielsweise durch Spritzgießen, hergestellt sein oder sie können als separate Teile aus Kunststoff oder Metall hergestellt sein und lösbar oder unlösbar mit der Sohle verbunden sein. Die gängigste Art von lösbar mit der Sohle verbindbaren Traktionshilfen sind Schraubstollen, die einen Gewindebolzen tragen, der in Gewindebuchsen einschraubbar ist, die integraler Bestandteil der Sohle sind.

Bei traditionellen Sportschuhen ist der Schaft des Schuhs auf die Laufsohle (die nachfolgend im Gegensatz zu der im Inneren des Schafts befindlichen Brandsohle nur als "Sohle" bezeichnet wird) aufgesetzt und durch Nähen oder Kleben, Anspritzen oder Anvulkanisieren fest mit der Oberseite der Sohle verbunden. Da die Sohle eine geschlossene Fläche darstellt, braucht bei der herkömmlichen Schuhherstellung das Schaftmaterial sohlenseitig weder geschlossen zu sein noch die Oberseite der Sohle vollständig zu bedecken. Vielmehr genügt es, wenn das Schaftmaterial auf der Oberseite der Sohle nur zu einem schmalen Streifen umgebogen und auf der Sohle befestigt wird.

Um der Schuhkonstruktion die nötige Festigkeit bei gleichzeitigem Erhalt der für das Gehen oder Laufen erforderlichen Biegsamkeit und Flexibilität zu verleihen, müssen bei einem mit Traktionshilfen versehenen Sportschuh die überwiegend aus Kunststoff bestehenden Sohlen verhältnismäßig massiv und schwer ausgebildet werden, und auch die Verbindung zwischen Schaftmaterial und Sohle muß in der Regel aufwendig verstärkt werden, um den hohen mechanischen Beanspruchungen bei der Ausübung der in Rede stehenden Sportarten über einen möglichst langen Zeitraum hinweg standhalten zu können.

In der nachveröffentlichten, aber früher angemeldeten Internationalen Patentanmeldung mit der Veröffentlichungsnummer WO 2006/014776 A1 ist ein Sportschuh mit einem Schaft und einer mit Traktionshilfen versehenen Sohle beschrieben, bei dem die Sohle im Inneren des Schaftes so angeordnet ist, daß nur die Traktionshilfen, die mit der Sohle vorzugsweise einstückig ausgebildet sind, durch entsprechende Löcher im Schaftmaterial nach außen ragen, wobei das Schaftmaterial die Unterseite der Sohle, mit Ausnahme der Traktionshilfen, vollständig bedeckt. Das Schaftmaterial besteht dabei aus Leder, Kunstleder, insbesondere Polyurethan, textilen Materialien oder Kombinationen daraus. Der Schaft ist aus mindestens zwei Teilen so zusammengenäht oder auf andere Weise verbunden, daß eine Naht um die gesamte Außenkontur der Sohle herum gebildet wird. Diese Naht ist nachteilig, weil sie beim Tragen des Schuhs den höchsten mechanischen Belastungen ausgesetzt ist und die zwangsläufige Perforation der Materialien in Bereich der Naht zum Eindringen von Wasser bzw. Feuchtigkeit in das Innere des Schuhs führen kann.

Bei der Herstellung dieses Schuhs wird gemäß WO 2006/014776 A1 von einer fertigen Sohle und einem fertigen, aus zwei Teilen zusammengenähten Schaft ausgegangen, die auf einem Leisten vereint werden, wobei der zunächst von innen nach außen umgestülpte Schaft über die auf dem Leisten befestigte und mit einer Kleberschicht versehene Sohle zurückgestülpt wird. Dieses Verfahren ist noch mit zu vielen einzelnen störungsanfälligen Arbeitsschritten verbunden und eignet sich nicht besonders zur Großserienproduktion.

Der Erfindung liegt die Aufgabe zugrunde, einen Sportschuh der eingangs genannten Gattung zu schaffen, der im Vergleich zu den bisher bekannten Schuhkonstruktionen insgesamt flexibler und elastischer ist, sich dabei aber einfacher und kostengünstiger herstellen läßt, ohne seine mechanische Stabilität, insbesondere in bezug auf eine möglichst wasserdichte Verbindung zwischen Schaft und Sohle, einzubüßen.

Aufgabe der Erfindung ist darüber hinaus, ein einfaches und kostengünstiges, im industriellen Maßstab durchführbares, automatisierbares Verfahren zur Herstellung eines solchen Sportschuhs bereitzustellen.

Diese Aufgabe wird erfindungsgemäß gelöst durch einen Sportschuh mit einem Schaft und einer Sohle, die bodenseitig mit einem Muster von Traktionshilfen zum Eingriff in die Oberfläche eines Rasen- oder Hartplatzes versehen ist, wobei die Sohle aus thermoplastischem und/oder elastomerem Kunststoff besteht und im Inneren des Schaftes angeordnet ist, welcher aus Leder, Kunstleder, Textilverbundstoff oder Composite-Material besteht und Durchbrechungen in Form eines Musters aufweist, das dem Muster von Traktionshilfen entspricht, und wobei nur die Traktionshilfen durch die Durchbrechungen des Schaftmaterials nach außen ragen und der Schaft die Unterseite der Sohle, mit Ausnahme der Traktionshilfen, vollständig bedeckt, und wobei die Sohle an den Schaft direkt angespritzt ist und der Schaft mit der Unterseite der Sohle vollflächig verbunden ist.

Von der Sohle des erfindungsgemäßen Schuhs ist von außen nichts zu sehen, mit Ausnahme der durch den Schaft hindurchragenden Traktionshilfen. Ein Träger des erfindungsgemäßen Sportschuhs berührt also nur mit den Spitzen der Traktionshilfen den Boden, üblicherweise also den Rasen eines Sportplatzes oder die Laufbahn eines Leichtathletikplatzes. Nur bei sehr weichem oder nassem Untergrund sinkt der erfindungsgemäße Sportschuh unter dem Gewicht seines Trägers so weit ein, daß die Außenoberfläche des Schaftmaterials, welches die Unterseite der innenliegenden Sohle bedeckt, mit dem Boden des Sportplatzes direkt in Berührung kommt.

Durch die Verlagerung der Sohle in das Innere des Schaftes ist es wesentlich leichter, eine feste, vollflächige Verbindung zwischen Schaft und Sohle herzustellen, so daß es möglich ist, die Sohle leichter, dünner, weicher und flexibler zu gestalten, ohne die mechanische Festigkeit der Gesamtkonstruktion zu beeinträchtigen. Mit Hilfe der Erfindung läßt sich, verglichen mit einer herkömmlichen Schuhkonstruktion, dieselbe mechanische Festigkeit mit einer geringeren Sohlenstärke, und damit einem geringeren Gesamtgewicht des Schuhs erreichen. Außerdem läßt sich eine wesentlich festere und weniger störanfällige vollflächige Verbindung zwischen dem Schaftmaterial und der Sohlenoberfläche erreichen als bei einem herkömmlichen Sportschuh mit außen angebrachter Sohle.

Das Material, aus dem der Schaft besteht, weist Durchbrechungen in Form eines Musters auf, das dem gewünschten Muster von Traktionshilfen entspricht. Das Schaftmaterial kann aus Leder, Kunstleder, Textilverbundstoff oder einem Composite-Material, auch mit mindestens teilweise geschäumten Schichten, bestehen; besonders bevorzugte Materialien sind thermoplastisches Polyurethan (TPU), Polyethylen (PE) und Ethylen-Vinylacetat-Polymere (EVA), an die sich Sohlen aus gleichem oder chemisch und physikalisch affinem Material besonders gut im Spritzgießverfahren anspritzen lassen.

Die Traktionshilfen ragen durch die Durchbrechungen des Schaftmaterials nach außen und der Schaft bedeckt und umschließt die Unterseite der Sohle vollständig, mit Ausnahme der Traktionshilfen.

Als Traktionshilfen kommen erfindungsgemäß alle Sorten von Spikes, Stollen, Griffelementen, aber auch Befestigungsnocken für Spikes, Stollen oder Griffelemente in Frage. Die Befestigungsnocken können ein Gewinde zum Aufschrauben der genannten Traktionselemente aufweisen, sie können mit Rastelementen versehen sein, mit deren Hilfe die Elemente aufgeklipst werden können, aber es kann sich auch um gewindelose Formkörper handeln, beispielsweise zylindrische oder polygonale Nocken, die in komplementär ausgebildete Ausnehmungen der aufzusteckenden Elemente eingreifen und entweder mit den Elementen fest verklebt werden, durch Erhitzen verschweißt werden oder über Auflaufflächen oder konisch ausgebildete Flächen lösbar oder unlösbar verklemmt werden.

Die Sohle des erfindungsgemäßen Sportschuhs besteht aus thermoplastischem und/oder elastomerem Kunststoff. Besonders bevorzugt weist die Sohle Zonen unterschiedlicher Härte und/oder unterschiedlicher Elastizität auf. Bevorzugte Beispiele für die genannten Kunststoffe sind thermoplastisches Polyurethan (TPU), Polyolefine, vorzugsweise mit elastomeren Anteilen, Silikone und Gemische aus den genannten Kunststoffen.

Die Sohle des erfindungsgemäßen Sportschuhs ist spritzgegossen, also durch Spritzgießen oder Montagespritzgießen aus einem der genannten thermoplastischen und/oder elastomeren Kunststoffe hergestellt, wobei die Sohle an das Schaftmaterial direkt angespritzt ist.

Zur Versteifung und/oder Erhöhung der Elastizität kann die Sohle mindestens ein Bewehrungselement enthalten, beispielsweise in Form eines Flächengebildes aus Fasern (Glas-, Kunststoff- oder Metallfasern), Metall (Band, Blech oder Draht) und/oder aus Kunststoff (Band, Platte oder Platine).

Besonders bevorzugt enthält die Sohle zusätzlich mindestens ein Dämpfungselement zur Stoßdämpfung und damit zur Schonung der Knochen, Bänder und Gelenke des die Schuhe tragenden Sportlers. Solche Dämpfungselemente bestehen vorzugsweise aus Elastomeren, z. B. auf Basis von Silikonen, die als Formkörper, z. B. in Stäbchenform, in dafür vorgesehene Ausnehmungen der Sohle eingesetzt werden können oder aber bei der Herstellung der Sohle aus unterschiedlichen Materialien (Mehrkomponentenspritzguß) integraler Bestandteil der Sohle werden.

Wie bei herkömmlichen Sportschuhen auch, kann die Oberseite der Sohle im Inneren des Schaftes zusätzlich mit einer Brandsohle abgedeckt sein, was sowohl die Ästhetik des Schuhs erhöht als auch den Tragekomfort verbessert. Die Brandsohle kann lose eingelegt sein, vorzugsweise wird sie auf die Oberseite der Sohle aufgeklebt oder auf andere Weise befestigt, z.B., aufgenäht.

Die eingangs genannte Aufgabe wird ferner gelöst durch ein Verfahren zur Herstellung eines Sportschuhs, bei dem aus mindestens einem Zuschnitt eines Schaftmaterials aus Leder, Kunstleder, Textilverbundstoff oder Composite-Material ein Schaft gebildet und mit einer Sohle aus thermoplastischem und/oder elastomerem Kunststoff verbunden wird, die auf ihrer Unterseite aus der Sohlenebene herausragende, in einem Muster angeordnete Traktionshilfen aufweist, wobei der Schaft so gebildet wird, daß er sich über die gesamte Sohlenfläche erstreckt, und das Schaftmaterial im Bereich der Sohlenfläche mit Durchbrechungen in Form eines Musters versehen wird, das dem gewünschten Muster von Traktionshilfen entspricht, und bei dem die Sohle im Spritzgießverfahren direkt auf die spätere Innenseite des Schaftmaterials so angespritzt wird, daß die Traktionshilfen mitgeformt werden und durch die Durchbrechungen des Schaftmaterials hindurch nach außen ragen und das Schaftmaterial mit der Unterseite der Sohle vollflächig verbunden wird.

Da der Schaft einen menschlichen Fuß, einschließlich Sohle, Zehen, Ferse, Knöchel und Beinansatz, umhüllen muß, ist für den Fachmann klar, daß die äußeren Kanten des Schaftmaterial-Zuschnitts - nach dem Anspritzen der Sohle auf die Innenseite des Schaftmaterials - direkt miteinander verbunden werden, um einen in etwa strumpfförmigen Schaft zu bilden, der eine Einstiegsöffnung besitzt, aber im übrigen geschlossen ist und sich außen über die gesamte Sohlenfläche erstreckt - im Gegensatz zu herkömmlichen Schuhkonstruktionen, bei denen das Schaftmaterial nur im Bereich eines schmalen Streifens um die Außenkontur der Sohle herum mit der Sohle fest verbunden wird. Die Verbindung der Schnittkanten des Schaftmaterials kann je nach Materialwahl durch Nähen, Kleben oder Verschweißen erfolgen.

Das erfindungsgemäße Verfahren ist kostengünstig durchführbar und automatisierbar, insbesondere in industriellem Maßstab, und es gestattet im Vergleich zu herkömmlichen Verfahren, eine dünnere, flexiblere und leichtere Sohle zu verwenden, ohne die Festigkeit der Gesamtkonstruktion zu beeinträchtigen. Infolge des direkten Anspritzens wird das Schaftmaterial mit der Unterseite der Sohle vollflächig verbunden. Das Verfahren ermöglicht es, eine homogene, dauerhaft feste und wasserdichte, aber zugleich flexible und elastische Verbindung zwischen Schaft und Sohle zu erhalten.

Es wird eine Sohle aus thermoplastischem und/oder elastomerem Kunststoff verwendet, wobei unter "elastomerem Kunststoff" auch Synthesekautschuk und Elastomere auf Butadien- oder Isoprenbasis, Silikone, Polyurethan-Elastomere und thermoplastische Kunststoffe mit elastomeren Anteilen zu verstehen sind.

Als Schaftmaterial werden Leder, Kunstleder, Textilverbundstoffe oder Composite-Materialien, insbesondere auch mit mindestens teilweise geschäumten Schichten, verwendet, wobei Schaftmaterialien bevorzugt werden, die zumindest Anteile aus thermoplastischem und/oder elastomerem Kunststoff enthalten, weil dies das direkte Spritzgießen ohne Verwendung von Primern oder haftvermittelnden Zwischenschichten erleichtert.

Das Spritzgießverfahren wird vorzugsweise mit einer zweiteiligen Gießform durchgeführt, wobei entweder der Schaft auf einem Leisten in die Form gefahren wird oder ein einziger flächiger oder bahnförmiger Schaftmaterisizuschnitt in die Gießform eingelegt wird, auf welchen die Sohle direkt angespritzt wird. Diese zweite Variante des Verfahrens ist besonders wirtschaftlich und daher besonders bevorzugt.

Bevorzugt wird als einer der beiden Teile der zweiteiligen Gießform ein Formdeckel verwendet, der Kavitäten für die Ausformung der Traktionshilfen enthält, so daß beim Spritzgießen die Sohle mit den Traktionshilfen einstückig ausgeformt und gleichzeitig mit dem Schaft verbunden wird. Wenn dabei mehrere unterschiedliche Materialien verwendet werden (Mehrkomponentenspritzguß), können diese auch unterschiedlich gefärbt sein oder unterschiedliche physikalische Eigenschaften (z. B. Dämpfung, Elastizität) aufweisen, wodurch die Traktionshilfen und die Sohle unterschiedlich gefärbt oder mit unterschiedlichen physikalischen Eigenschaften - aber dennoch einstückig - hergestellt werden können. Für unterschiedliche Muster von Traktionshilfen werden dann nur verschiedene Formdeckel gebraucht, während der zweite Teil der Form immer derselbe sein kann.

Als Alternative kann das Montagespritzgießen angewandt werden, bei dem als einer der beiden Teile der Gießform ein Formdeckel verwendet wird, in den separat hergestellte Traktionshilfen eingelegt werden, so daß sie beim Spritzgießen der Sohle integrale Bestandteile derselben werden und die Sohle gleichzeitig mit dem Schaft verbunden wird. Auch hierbei kann eine einzige Basisform für unterschiedliche Muster von Traktionshilfen verwendet werden, wenn unterschiedliche Formdeckel eingesetzt werden, was die Formkosten verringert und eine wirtschaftliche industrielle Massenproduktion gestattet.

Vorzugsweise ist der Schaft mindestens im Bereich der Sohle einstückig ohne Naht und Stoß ausgebildet und umschließt die Sohle vollständig, auch an deren Rändern. Falls Nähte im Schaftmaterial vorhanden sind, werden diese im Inneren des Schafts vor dem Spritzgießen mit einem Dichtband abgedichtet, damit die Gießmasse, die üblicherweise bei einer Temperatur zwischen 180 und 220°C spritzgegossen wird, nicht durch die Nähte hindurchgedrückt werden kann.

Zur Verstärkung der Sohle kann in die Gießform ein an die Konturen der Sohle angepaßtes Gewebe oder Gewirke aus Glas-, Metall- oder Kunststoffasern oder ein anderes geeignetes Bewehrungselement aus Metall oder Kunststoff eingelegt werden, das beim Spritzgießen integraler Bestandteil der Sohle wird und sowohl die mechanische Festigkeit als auch die Elastizität der Sohle erhöht.

Wie bereits erwähnt, kann die fertige Sohle im Inneren des Schafts mit einer Brandsohle abgedeckt werden, um die Ästhetik und den Tragekomfort des erfindungsgemäßen Sportschuhs zu verbessern.

Schließlich kann zur Verstärkung des Zehen- und/oder Fersenbereichs des Schuhs von außen eine Schutzkappe auf die entsprechenden Schaftbereiche aufgeklebt oder ebenfalls aufgespritzt werden.

Die Erfindung wird nachfolgend anhand der Zeichnung näher erläutert:
Figur 1 ist ein Schnitt (schematisch) durch eine Ausführungsform eines erfindungsgemäßen Fußballschuhs mit einstückig gespritzter Sohle;
Figur 2 ist ein vergrößertes Detail aus Figur 1 und zeigt die Verbindung zwischen Schaft und Sohle mit einem einstückig mit der Sohle gespritzten Traktionselement;
Figur 3 zeigt in vergrößertem, schematischem Schnitt die Verbindung zwischen Schaft und Sohle in einer anderen Ausführungsform mit einem in die Sohle eingespritzten Befestigungsnocken für einen Stollen.

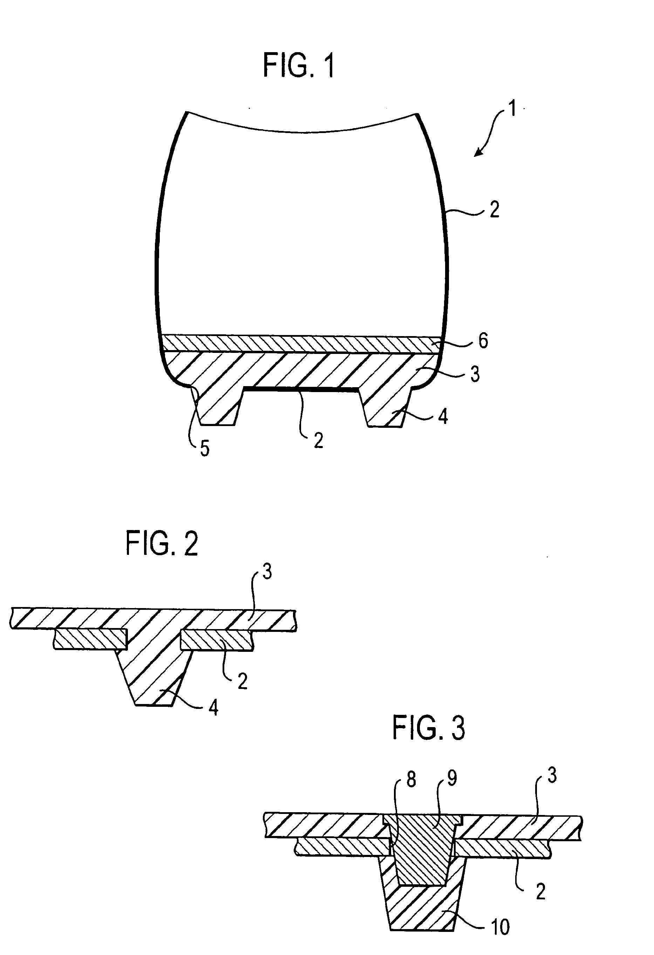

Bei der gezeichneten Ausführungsform (Figur 1) besteht der Sportschuh 1 aus einem Schaft 2 und einer im Inneren des Schaftes 2 angeordneten Sohle 3, die bodenseitig mit einem Muster von Traktionshilfen zum Eingriff in die Oberfläche eines Rasen- oder Hartplatzes versehen ist, wobei die Traktionshilfen als Stollen 4 ausgebildet sind und durch den Schaft 2 hindurch nach außen ragen. Das Schaftmaterial weist Duchbrechungen 5 in Form eines Musters auf, das dem Muster entspricht, in weichem die Stollen 4 angeordnet sind. Die Unterseite der Sohle 3 ist mit Ausnahme der Stollen 4 vollständig vom Schaft 2 bedeckt, der die Sohle 3 auch an den abgerundeten äußeren Kanten der Sohle 3 umschließt.

Die Sohle 3 und die Stollen 4 sind einstückig im Spritzgießverfahren aus thermoplastischem Polyurethan hergestellt und in ein und demselben Spritzgießvorgang direkt an das Schaftmaterial, einem ebenfalls mit thermoplastischem Polyurethan beschichteten Textilverbundstoff, angespritzt und dadurch fest und vollflächig miteinander verbunden.

Die Oberseite der Sohle 3 ist im Inneren des Schaftes 2 mit einer Brandsohle 6 abgedeckt und verklebt.

Wie aus dem vergrößerten Detail (Figur 2) ersichtlich, ist der einstückig mit der Sohle 3 gespritzte Stollen 4 im Querschnitt hutförmig ausgebildet, also mit einem Rücksprung versehen, wodurch die Durchbrechungen 8 im Schaftmaterial 2 vollständig überdeckt und abgedichtet werden, so daß keine Feuchtigkeit von der Unterseite des Schuhs durch die Durchbrechungen 8 zur innenliegenden Sohle 3 vordringen kann.

Wenn die Sohle 3 im Montagespritzgießverfahren in einer zweiteiligen Gießform hergestellt wird, bei der ein Formdeckel verwendet wird, in den separat hergestellte Befestigungsnocken 9 eingelegt werden, so daß sie beim Spritzgießen integrale Bestandteile der Sohle 3 werden, ragen nur die Befestigungsnocken 9 durch die Durchbrechungen 8 im Schaft 2 hindurch (Figur 3). Bei dieser Ausführungsform wird von außen ein Stollen 10 mit dem Befestigungsnocken 9 fest verbunden, wobei die Befestigung lösbar oder unlösbar sein kann, beispielsweise durch Verkleben oder Verrasten, Verklemmen oder Verschrauben. Auch bei dieser Ausführungsform ist der Außendurchmesser des Stollens 10 größer als der Durchmesser der Durchbrechung 8, um eine Flächenpressung zwischen einer Stirnseite des Stollens 10 und der Oberfläche des Schafts 2 und damit eine sichere Abdichtung der Durchbrechung 8 zu erreichen.

## Patentansprüche

1. Sportschuh (1) mit einem Schaft (2) und einer Sohle (3), die bodenseitig mit einem Muster von Traktionshilfen (4) zum Eingriff in die Oberfläche eines Rasen- oder Hartplatzes versehen ist, wobei die Sohle aus thermoplastischem und/oder elastomerem Kunststoff besteht und im Inneren des Schaftes angeordnet ist, welcher aus Leder, Kunstleder, Textilverbundstoff oder Composite-Material besteht und Durchbrechungen (5) in Form eines Musters aufweist, das dem Muster von Traktionshilfen entspricht, und wobei nur die Traktionshilfen durch die Durchbrechungen des Schaftmaterials nach außen ragen und der Schaft die Unterseite der Sohle, mit Ausnahme der Traktionshilfen, vollständig bedeckt, **dadurch gekennzeichnet, daß** die Sohle an den Schaft direkt angespritzt ist und der Schaft mit der Unterseite der Sohle vollflächig verbunden ist.

2. Sportschuh nach Anspruch 1, **dadurch gekennzeichnet, daß** die Traktionshilfen Spikes, Stollen, Griffelemente oder Befestigungsnocken für Spikes, Stollen oder Griffelemente sind.

3. Sportschuh nach Anspruch 1 oder 2, **dadurch gekennzeichnet, daß** die Sohle Zonen unterschiedlicher Härte und/oder Elastizität aufweist.

4. Sportschuh nach einem der Ansprüche 1 bis 3, **dadurch gekennzeichnet, daß** die Sohle aus Polyurethan, Polyolefin, elastomerem Polyolefin, Silikon oder deren Gemischen besteht.

5. Sportschuh nach einem der Ansprüche 1 bis 4, **dadurch gekennzeichnet, daß** die Sohle mit den Traktionshilfen einstückig spritzgegossen ist.

6. Sportschuh nach einem der Ansprüche 1 bis 5, **dadurch gekennzeichnet, daß** in die Sohle Buchsen in dem für die Traktionshilfen vorgesehenen Muster zur lösbaren oder unlösbaren Befestigung der Traktionshilfen eingelassen sind.

7. Sportschuh nach Anspruch 6, **dadurch gekennzeichnet, daß** die Buchsen als Gewindebuchsen oder Rastbuchsen ausgebildet sind.

8. Sportschuh nach einem der Ansprüche 1 bis 7, **dadurch gekennzeichnet, daß** die Sohle mindestens ein Bewehrungselement zur Versteifung und/oder zur Erhöhung der Elastizität enthält.

9. Sportschuh nach Anspruch 8, **dadurch gekennzeichnet, daß** das Bewehrungselement ein Flächengebilde aus Fasern, Metall und/oder Kunststoff enthält.

10. Sportschuh nach einem der Ansprüche 1 bis 9, **dadurch gekennzeichnet, daß** die Sohle mindestens ein Dämpfungselement enthält.

11. Sportschuh nach einem der Ansprüche 1 bis 10, **dadurch gekennzeichnet, daß** der Schaft aus einem insbesondere mindestens teilweise geschäumten, thermoplastischen Verbundmaterial auf Basis von Polyurethan, Polyethylen und/oder Ethylenvinylacetat besteht.

12. Sportschuh nach einem der Ansprüche 1 bis 11, **dadurch gekennzeichnet, daß** der Schaft mindestens im Bereich der Sohle einstückig ohne Naht und Stoß ausgebildet ist und die Sohle auch an deren Rändern vollständig umschließt.

13. Sportschuh nach einem der Ansprüche 1 bis 12, **dadurch gekennzeichnet, daß** die Oberseite der Sohle im Inneren des Schaftes mit einer Brandsohle abgedeckt ist.

14. Sportschuh nach Anspruch 13, **dadurch gekennzeichnet, daß** die Brandsohle auf die Oberseite der Sohle aufgeklebt ist.

15. Verfahren zur Herstellung eines Sportschuhs (1) gemäß einem der Ansprüche 1 bis 14, bei dem aus mindestens einem Zuschnitt eines Schaftmaterials aus Leder, Kunstleder, Textilverbundstoff oder Composite-Material ein Schaft (2) gebildet und mit einer Sohle (3) aus thermoplastischem und/oder elastomerem Kunststoff verbunden wird, die auf ihrer Unterseite aus der Sohlenebene herausragende, in einem Muster angeordnete Traktionshilfen (4) aufweist, wobei der Schaft so gebildet wird, daß er sich über die gesamte Sohlenfläche erstreckt, und das Schaftmaterial im Bereich der Sohlenfläche mit Durchbrechungen (5) in Form eines Musters versehen wird, das dem gewünschten Muster von Traktionshilfen entspricht, **dadurch gekennzeichnet, daß** die Sohle im Spritzgießverfahren direkt auf die spätere Innenseite des Schaftmaterials so angespritzt wird, daß die Traktionshilfen mitgeformt werden und durch die Durchbrechungen des Schaftmaterials hindurch nach außen ragen und das Schaftmaterial mit der Unterseite der Sohle vollflächig verbunden wird.

16. Verfahren nach Anspruch 15, **dadurch gekennzeichnet, daß** ein Schaftmaterial verwendet wird, das zumindest Anteile aus thermoplastischem und/oder elastomerem Kunststoff enthält.

17. Verfahren nach Anspruch 15 oder 16, **dadurch gekennzeichnet, daß** das Spritzgießverfahren mit einer zweiteiligen Gießform durchgeführt wird, wobei der Schaft auf einem Leisten in die Form gefahren wird.

18. Verfahren nach Anspruch 15 oder 16, **dadurch gekennzeichnet, daß** das Spritzgießverfahren mit einer zweiteiligen Gießform durchgeführt wird, in die ein einziger flächiger oder bahnförmiger Schaftmaterialzuschnitt eingelegt wird, auf den die Sohle direkt angespritzt wird.

19. Verfahren nach Anspruch 17 oder 18, **dadurch gekennzeichnet, daß** ein Formdeckel als einer der beiden Teile der Gießform verwendet wird, der Kavitäten für die Ausformung der Traktionshilfen enthält, so daß beim Spritzgießen die Sohle mit den Traktionshilfen einstückig ausgeformt und gleichzeitig mit dem Schaft verbunden wird.

20. Verfahren nach einem der Ansprüche 17 bis 19, **dadurch gekennzeichnet, daß** als einer der beiden Teile der Gießform ein Formdeckel verwendet wird, in den separat hergestellte Traktionshilfen eingelegt werden, so daß sie beim Spritzgießen der Sohle integrale Bestandteile der Sohle werden und die Sohle gleichzeitig mit dem Schaft verbunden wird.

21. Verfahren nach einem der Ansprüche 15 bis 20, **dadurch gekennzeichnet, daß** zur Verstärkung der Sohle in die Gießform ein an die Konturen der Sohle angepaßtes Gewebe oder Gewirke aus Glas-, Metall- oder Kunststoffasern eingelegt wird, das beim Spritzgießen integraler Bestandteil der Sohle wird.

22. Verfahren nach einem der Ansprüche 15 bis 21, **dadurch gekennzeichnet, daß** die fertige Sohle im Inneren des Schafts mit einer Brandsohle abgedeckt wird.

23. Verfahren nach einem der Ansprüche 15 bis 22, **dadurch gekennzeichnet, daß** zur Verstärkung des Zehen- und/oder Fersenbereichs des Schuhs von außen Schutzkappen auf die entsprechenden Schaftbereiche aufgeklebt oder aufgespritzt werden.

## Claims

1. A sports shoe (1) comprising an upper (2) and a sole (3), the bottom side of the latter being provided with a pattern of traction assisting means (4) for penetrating the surface of a lawn or hard court, the sole being made of thermoplastic and/or elastomeric plastic and arranged in the interior of the upper, the latter being made of leather, artificial leather, a textile compound or composite material and having through holes (5) in the form of a pattern corresponding to the pattern of the traction assisting means, only the traction assisting means projecting through the through holes of the upper material towards outside, and the upper entirely covering the underside of the sole except for the traction assisting means, **characterized in that** the sole is directly bonded to the upper by injection-moulding and the upper is connected with the underside of the sole across the full surface area.

2. The sports shoe according to claim 1, **characterized in that** the traction assisting means are spikes, studs, grip elements or fastening cams for spikes, studs or grip elements.

3. The sports shoe according to claim 1 or 2, **characterized in that** the sole has areas with differing hardness and/or elasticity.

4. The sports shoe according to any of the claims 1 to 3, **characterized in that** the sole is made of polyurethane, polyolefin, elastomeric polyolefin, silicone or mixtures thereof.

5. The sports shoe according to any of the claims 1 to 4, **characterized in that** the sole is injection-moulded in one piece with the traction assisting means.

6. The sports shoe according to any of the claims 1 to 5, **characterized in that** sleeves are embedded in the sole in the pattern which is provided for the traction assisting means, the sleeves serving for detachably or non-detachably fastening the traction assisting means.

7. The sports shoe according to claim 6, **characterized in that** the sleeves are designed as threaded sleeves or latching sleeves.

8. The sports shoe according to any of the claims 1 to 7, **characterized in that** the sole has at least one armoring element for stiffening and/or for increasing the elasticity.

9. The sports shoe according to claim 8, **characterized in that** the armoring element contains a sheet structure of fibers, metal and/or plastic.

10. The sports shoe according to any of the claims 1 to 9, **characterized in that** the sole contains at least one damping element.

11. The sports shoe according to any of the claims 1 to 10, **characterized in that** the upper is made of a thermoplastic composite material which is based on polyurethane, polyethylene and/or ethylene vinyl acetate and in particular foamed at least in part.

12. The sports shoe according to any of the claims 1 to 11, **characterized in that**, at least in the region of the sole, the upper is designed in one piece and without any seam and joint and completely encloses the sole even at its edges.

13. The sports shoe according to any of the claims 1 to 12, **characterized in that** the top side of the sole is covered with an insole in the interior of the upper.

14. The sports shoe according to claim 13, **characterized in that** the insole is glued to the top side of the sole.

15. A method of producing a sports shoe (1) according to any of the claims 1 to 14, wherein an upper (2) is formed from at least one pre-cut part of an upper material of leather, artificial leather, a textile compound or composite material, and is connected with a sole (3) of thermoplastic and/or elastomeric plastic, the sole having traction assisting means (4) projecting at the underside out of the plane of the sole and arranged in a pattern, the upper being formed such that it extends across the entire sole surface area, and the upper material being provided in the region of the sole surface area with through holes (5) in the form of a pattern which corresponds to the desired pattern of the traction assisting means, **characterized in that** the sole is directly bonded to the resulting inner side of the upper material in an injection-moulding method in such a manner that the traction assisting means are also formed in this process and project through the through holes of the upper material towards outside and the upper material is connected with the underside of the sole across the full surface area.

16. The method according to claim 15, **characterized in that** an upper material is used which contains at least portions of thermoplastic and/or elastomeric plastic.

17. The method according to claim 15 or 16, **characterized in that** the injection-moulding method is carried out with a two-part injection mould, the upper being introduced into the mould on a last.

18. The method according to claim 15 or 16, **characterized in that** the injection-moulding method is carried out with a two-part injection mould, in which one single sheet-like or web-shaped blank of the upper material is placed, to which the sole will be directly bonded by injection-moulding.

19. The method according to claim 17 or 18, **characterized in that** a mould cover is used as one of the two parts of the injection mould, which mould cover has cavities for forming the traction assisting means, so that during injection-moulding the sole is formed in one piece with the traction assisting means and simultaneously is connected with the upper.

20. The method according to any of the claims 17 to 19, **characterized in that** a mould cover is used as one of the two parts of the injection mould, with separately produced traction assisting means being placed in the mould cover, so that they become integral components of the sole during injection-moulding the sole and the sole is simultaneously connected with the upper.

21. The method according to any of the claims 15 to 20, **characterized in that** for reinforcing the sole a fabric or knitted fabric adapted to the contours of the sole and made of glass, metal or plastic fibers is placed in the injection mould, said fabric or knitted fabric becoming an integral component of the sole during injection-moulding.

22. The method according to any of the claims 15 to 21, **characterized in that** the finished sole is covered with an insole in the interior of the upper.

23. The method according to any of the claims 15 to 22, **characterized in that**, for reinforcing the toe and/or heel regions of the shoe, protective caps are applied from outside to the corresponding upper regions by gluing or injection-moulding.

## Revendications

1. Chaussure de sport (1) comportant une tige (2) et une semelle (3) qui est pourvue côté sol d'un motif d'aides de traction (4) pour s'accrocher dans la surface d'un terrain en gazon ou d'un terrain dur, dans laquelle la semelle est constituée de matière plastique thermoplastique et/ou de matière plastique élastomère et agencée à l'intérieur de la tige qui est constituée de cuir, de similicuir, de non-tissés ou de matériau composite et qui présente des percées (5) sous la forme d'un motif qui correspond au motif d'aides de traction, et dans laquelle seules les aides de traction font saillie vers l'extérieur à travers les percées du matériau de la tige, et la tige recouvre entièrement la face inférieure de la semelle à l'exception des aides de traction, **caractérisée en ce que** la semelle est directement moulée par injection sur la tige, et la tige est reliée à la face inférieure de la semelle sur toute la surface.

2. Chaussure de sport selon la revendication 1, **caractérisée en ce que** les aides de traction sont des pointes, des crampons, des éléments d'accroche ou des ergots de fixation pour des pointes, des crampons ou des éléments d'accroche.

3. Chaussure de sport selon la revendication 1 ou 2, **caractérisée en ce que** la semelle présente des zones de différente dureté et/ou de différente élasticité.

4. Chaussure de sport selon l'une des revendications 1 à 3, **caractérisée en ce que** la semelle est en polyuréthane, en polyoléfine, en polyoléfine élastomère, en silicone ou en leurs mélanges.

5. Chaussure de sport selon l'une des revendications 1 à 4, **caractérisée en ce que** la semelle est moulée par injection d'un seul tenant avec les aides de traction.

6. Chaussure de sport selon l'une des revendications 1 à 5, **caractérisée en ce que** dans la semelle, des douilles sont encastrées selon le motif prévu pour les aides de traction, dans le but de fixer les aides de traction de manière détachable ou non détachable.

7. Chaussure de sport selon la revendication 6, **caractérisée en ce que** les douilles sont réalisées sous forme de douilles taraudées ou de douilles à enclenchement.

8. Chaussure de sport selon l'une des revendications 1 à 7, **caractérisée en ce que** la semelle contient au moins un élément d'armature pour un renforcement et/ou une augmentation de l'élasticité.

9. Chaussure de sport selon la revendication 8, **caractérisée en ce que** l'élément d'armature contient un composé surfacique en fibres, en métal et/ou en matière plastique.

10. Chaussure de sport selon l'une des revendications 1 à 9, **caractérisée en ce que** la semelle contient au moins un élément d'amortissement.

11. Chaussure de sport selon l'une des revendications 1 à 10, **caractérisée en ce que** la tige est constituée d'un matériau composite thermoplastique à base de polyuréthane, de polyéthylène et/ou d'éthylène-vinylacétate, en particulier au moins partiellement moussé.

12. Chaussure de sport selon l'une des revendications 1 à 11, **caractérisée en ce que** la tige est réalisée d'un seul tenant sans couture et sans aboutement au moins dans la région de la semelle et **en ce qu'**elle entoure entièrement la semelle même sur ses bords.

13. Chaussure de sport selon l'une des revendications 1 à 12, **caractérisée en ce que** la face supérieure de la semelle est recouverte d'une semelle intérieure à l'intérieur de la tige.

14. Chaussure de sport selon la revendication 13, **caractérisée en ce que** la semelle intérieure est collée sur la face supérieure de la semelle.

15. Procédé de fabrication d'une chaussure de sport (1) selon l'une des revendications 1 à 14, dans lequel à partir d'au moins une pièce découpée d'un matériau de tige en cuir, en similicuir, en non-tissés ou en matériau composite, on forme une tige (2) qu'on relie à une semelle (3) en matière plastique thermoplastique et/ou élastomère qui présente sur sa face inférieure des aides de traction (4) faisant saillie hors du plan de semelle sur sa face inférieure et agencées selon un motif, la tige étant formée de telle sorte qu'elle s'étend sur toute la surface de semelle et, dans la région de la surface de la semelle, le matériau de la tige étant pourvu de percées (5) sous forme d'un motif souhaité qui correspond au motif d'aides de traction, **caractérisée en ce que** la semelle est moulée par injection selon un procédé de moulage par injection directement sur la face intérieure future du matériau de la tige de telle sorte que les aides de traction sont formées en même temps et font saillie vers l'extérieur à travers les percées du matériau de la tige, et le matériau de la tige est relié à la face inférieure de la semelle sur toute la surface.

16. Procédé selon la revendication 15, **caractérisée en ce qu'**on utilise un matériau de tige qui contient au moins des parts de matière plastique thermoplastique et/ou élastomère.

17. Procédé selon la revendication 15 ou 16, **caractérisée en ce que** le procédé de moulage par injection est effectué avec un moule en deux parties, la tige étant introduite dans le moule sur un embauchoir.

18. Procédé selon la revendication 15 ou 16, **caractérisée en ce que** le procédé de moulage par injection est effectué avec un moule en deux parties dans lequel est insérée une seule découpe de matériau de tige surfacique ou en forme de bande, sur laquelle la semelle est directement moulée par injection.

19. Procédé selon la revendication 17 ou 18, **caractérisée en ce qu'**on utilise en tant qu'une des deux parties du moule un couvercle de moule qui contient des cavités pour la conformation des aides de traction, de sorte que lors du moulage par injection, la semelle est conformée d'un seul tenant avec les aides de traction et reliée en même temps à la tige.

20. Procédé selon l'une des revendications 17 à 19, **caractérisée en ce qu'**on utilise en tant qu'une des deux parties du moule un couvercle de moule dans lequel sont insérées des aides de traction séparément fabriquées, de sorte que lors du moulage par injection de la semelle, elles deviennent une partie intégrale de la semelle et qu'en même temps, la semelle est reliée à la tige.

21. Procédé selon l'une des revendications 15 à 20, **caractérisée en ce que** pour renforcer la semelle, on place dans le moule un tissu ou un maillage en fibres de verre, en métal ou en matière plastique, qui est adapté aux contours de la semelle et qui fait partie intégrale de la semelle lors du moulage par injection.

22. Procédé selon l'une des revendications 15 à 21, **caractérisée en ce que** la semelle terminée est recouverte par une semelle intérieure à l'intérieur de la tige.

23. Procédé selon l'une des revendications 15 à 22, **caractérisée en ce que** pour renforcer la région des orteils et/ou du talon de la chaussure, des bouts et/ou contreforts de protection sont collés ou moulés par injection depuis l'extérieur sur les régions de tige correspondantes.
